# EUROPÄISCHE PATENTANMELDUNG

(11) **EP 1 770 401 A1**
(43) Veröffentlichungstag der Anmeldung: **04.04.2007**
(21) Anmeldenummer: 05021101.0
(22) Anmeldetag: 28.09.2005
(51) Int. Cl.: G01P 3/489, G01P 3/481

(54) **Vorrichtung und Verfahren zum Erfassen von Drehzahlen**

(71) Anmelder: Jaquet AG, 4054 Basel (CH)
(72) Erfinder: Griessmann, Marcel, 68700 Steinbach (FR); Möller, Udo, 4310 Rheinfelden (CH)
(74) Vertreter: Blum, Rudolf Emil

(57) **Zusammenfassung**

Eine Vorrichtung zur Messung von Drehzahlen hat eine Sensoreinrichtung, die ein drehzahlabhängiges Sensorsignal erzeugt, und eine Signalverarbeitungseinrichtung (4, 6), die das Sensorsignal auf einen festgelegten Pegel verstärkt und einem Ausgang (8) zuführt. Die Signalverarbeitungseinrichtung (4, 5) ist mit einer Schutzeinrichtung ausgestattet ist, die die Vorrichtung vor thermischen Schäden, z. B. durch Kurzschlüsse oder EMV verursacht, schützt.

## Beschreibung

Hintergrund Die Hier beschriebenen Ausführungsbeispiele der Erfindung betreffen allgemein eine Vorrichtung und ein Verfahren zum Erfassen von Drehzahlen. Die Ausführungsbeispiele betreffen insbesondere Einrichtungen und Verfahren zur Verarbeitung drehzahlabhängiger Sensorsignale.

### Stand der Technik

Bei einer bekannten Vorrichtung zur Messung von Drehzahlen ist ein Permanentmagnet mit einem Hall-Sensor kombiniert. Diese Vorrichtung eignet sich in den verschiedensten Anwendungen, beispielsweise in Maschinen und Fahrzeugen, zum berührungslosen Erfassen von Drehzahlen. In einer solchen Vorrichtung ist der Permanentmagnet nahe einer ferromagnetischen Struktur, beispielsweise einem Zahnrad oder Polrad, positioniert. Bewegen sich zum Beispiel die Zähne eines Zahnrades am Permanentmagneten vorbei, ändert sich das Magnetfeld in Abhängigkeit der sich vorbeibewegenden Zähne. Das sich ändernde Magnetfeld erzeugt im Hall-Sensor eine Hall-Spannung, die sich entsprechend der Magnetfeldänderung ändert. Die Hallspannung ist ein Sensorsignal, das nach einer Vorverarbeitung, z.B. Filterung, als Rechtecksignal vorliegt.

Die vorrichtung zur Messung von Drehzahlen enthält ausserdem eine Signalverarbeitungseinrichtung, die das Sensorsignal auf einen festgelegten Pegel verstärkt und einem Ausgang zur weiteren Auswertung zuführt. Die Signalverarbeitungseinrichtung hat als Ausgangsstufe eine Push-Pull Schaltung, deren Ausgangsstrom von einer externen Last begrenzt wird. Die Ausgangstufe liefert ein Rechtecksignal mit einem hohen Pegel, der in etwa der Spannungsversorgung (+V) der Vorrichtung zur Messung von Drehzahlen entspricht, und einem tiefen Pegel, der in etwa bei 0 Volt liegt.

Bei einer solchen Vorrichtung zur Messung von Drehzahlen können unter bestimmten Umständen Störungen auftreten. So können beispielsweise Anschlussfehler (Verdrahtungsfehler), Leitungsunterbrüche oder Überhitzungen auftreten, die in der Vorrichtung zu Schäden führen können.

### Darstellung der Erfindung

Ein Ziel der hier beschriebenen Ausführungsbeispiele der Erfindung ist daher, eine Vorrichtung zur Messung von Drehzahlen so auszugestalten, dass die genannten Störungen keine Schäden verursachen.

Ein Aspekt der Erfindung betrifft eine Vorrichtung zur Messung von Drehzahlen, mit einer Sensoreinrichtung, die ein drehzahlabhängiges Sensorsignal erzeugt, und einer Signalverarbeitungseinrichtung, die das Sensorsignal auf einen festgelegten Pegel verstärkt und einem Ausgang zuführt, wobei die Signalverarbeitungseinrichtung mit einer Schutzeinrichtung ausgestattet ist, die die Vorrichtung vor Schäden, insbesondere thermischen Schäden, schützt.

In einem Ausführungsbeispiel ist die Vorrichtung so ausgestaltet, dass sie vor thermischen Schäden, die durch hohe Kurzschlussströme verursacht werden können, geschützt ist. Die Vorrichtung zur Messung von Drehzahlen hat beispielsweise drei Anschlussleitungen, zwei für die Spannungsversorgung (+V, 0V) und eine für das Ausgangssignal. Bei einer falschen Verdrahtung der Leitung für das Ausgangssignal kann ein elektrischer Kontakt zu +V oder 0V hergestellt werden. Damit ist keine externe Last vorhanden, d.h. R_{L} ≈ 0 Ω, und der Strom kann ohne Schutzmassnahmen stark ansteigen. In einem Ausführungsbeispiel ist die Vorrichtung so ausgestaltet, dass sie einen Kurzschluss sehr schnell erkennt und Schutzmassnahmen ergreift.

Ein weiterer Aspekt der Erfindung betrifft daher eine Vorrichtung zur Messung von Drehzahlen, mit einer Sensoreinrichtung, die ein drehzahlabhängiges Sensorsignal erzeugt, und einer Signalverarbeitungseinrichtung, die das Sensorsignal auf einen festgelegten Pegel verstärkt und einem Ausgang zuführt, wobei die Signalverarbeitungseinrichtung eine Detektoreinrichtung hat, die ausgestaltet ist, um einen ersten Kurzschluss zwischen dem Ausgang und einem ersten Spannungsanschluss festzustellen, und um einen zweiten Kurzschluss zwischen dem Ausgang und einem zweiten Spannungsanschluss festzustellen, und eine Auswerteeinrichtung hat, die bei einem Auftreten des ersten Kurzschlusses den Ausgang auf einen ersten Wert setzt, und bei einem Auftreten des zweiten Kurzschlusses den Ausgang auf einen zweiten Wert setzt, um so die Signalverarbeitungseinrichtung vor einer Beschädigung durch Kurzschlussströme zu schützen.

In einem Ausführungsbeispiel ist die Vorrichtung so ausgestaltet, dass sie vor thermischen Schäden, die durch hohe Ströme während Umschaltphasen verursacht werden können, geschützt ist. Während der Umschaltphasen nimmt die Ausgangsstufe mehr Leistung auf. Herrscht die erhöhte Leistungsaufnahme während schnell aufeinander folgenden Umschaltphasen länger an, z. B. bei durch elektromagnetische Felder verursachten Störungen (EMV) im Frequenzbereich zwischen ca. 300 kHz und ca. 1 MHz, kann es zu einer Überhitzung der Vorrichtung kommen. In einem Ausführungsbeispiel ist die Vorrichtung so ausgestaltet, dass sie durch EMV verursachtes unkontrolliertes Umschalten einschränkt.

Ein anderer Aspekt der Erfindung betrifft daher eine Vorrichtung zur Messung von Drehzahlen, mit einer Sensoreinrichtung, die ein drehzahlabhängiges Sensorsignal erzeugt, und einer Signalverarbeitungseinrichtung, die das Sensorsignal auf einen festgelegten Pegel verstärkt und einem Ausgang zuführt, wobei die Signalverarbeitungseinrichtung eine Stabilisierungseinrichtung hat, die das Sensorsignal nach einer Umschaltung von einem hohen auf einen niedrigen Pegel und nach einer Umschaltung von einem niedrigen Pegel auf einen hohen Pegel für eine festgelegte Zeitdauer stabilisiert und so verhindert, dass das Sensorsignal unkontrolliert umschaltet.

Ein zusätzlicher Aspekt der Erfindung betrifft ein Verfahren zum Bestimmen einer Störung in einer Vorrichtung zur Messung von Drehzahlen. Eine Messeinheit wird an einen Ausgang der Vorrichtung gekoppelt, um Ausgangsspannungswerte zu messen. Im Normalbetrieb wird für ein "High" Signal eine Spannung in einem ersten Bereich gemessen, und für ein "Low" Signal eine Spannung in einem zweiten Bereich. Im Fall einer Unterbrechung einer +V Spannungszuleitung wird für ein "High" Signal eine Spannung in einem dritten Bereich gemessen, und für ein "Low" Signal eine Spannung in einem vierten Bereich. Im Fall einer Unterbrechung einer 0V Spannungszuleitung wird für ein "High" Signal eine Spannung in einem fünften Bereich gemessen, und für ein "Low" Signal eine Spannung in einem sechsten Bereich. Im Fall einer Unterbrechung zum Ausgang wird dagegen eine vorbestimmte Spannung gemessen.

Gegenüber bekannten Massnahmen zum Schutz vor hohen Kurzschlussströmen hat die erfindungsgemässe Schutzmassnahme den Vorteil, dass keine interne Lasten (lineare oder temperaturabhängige (z.B. PTC) Widerstände), die undefiniert hohe Ströme verhindern, benötigt werden, and denen ein unerwünschter Spannungsabfall entsteht. Hinzukommt das die so ausgestaltete Vorrichtung sehr verlustleistungsarm ist, was vor allem bei einer Integration eines Hall-Sensors in einen Halbleiter von Vorteil ist.

Zusätzlich hat eine mit den Schutzmassnahmen ausgestattete Vorrichtung den Vorteil einer grösseren Empfindlichkeit des Sensors und eines grösseren Messabstandes von Sensor und Polrad.

### Kurze Beschreibung der Zeichnungen

Weitere Ausgestaltungen, Vorteile, neue Eigenschaften und Anwendungen der Erfindung ergeben sich aus der folgenden detaillierten Beschreibung unter Einbezug der Zeichnungen. In den Zeichnungen haben gleiche Elemente die gleichen Bezugszeichen. In den Zeichnungen zeigen:
Figur 1 eine schematische Darstellung eines Ausführungsbeispiels einer Vorrichtung zur Messung von Drehzahlen mit einem Hall-Sensor,
Figur 2 eine schematische Darstellung eines Ausführungsbeispiels einer Vorrichtung zur Verarbeitung eines Sensorsignals,
Figur 3 eine schematische Darstellung eines Ausführungsbeispiels einer Steuerschaltung der in Figur 2 gezeigten Signalverarbeitungseinrichtung,
Figur 4 eine schematische Darstellung eines Ausführungsbeispiels einer Stabilisierungsschaltung, und
Figur 5 eine schematische Darstellung eines Ausführungsbeispiels einer Fehlererkennungsschaltung.

### Detaillierte Beschreibung einiger Ausführungsbeispiele

Die detaillierte Beschreibung einiger Ausführungsbeispiele erfolgt an Hand einer Vorrichtung zum Erfassen von Drehzahlen mittels eines oder mehrerer magnetfeldsensitiven Sensoren, beispielsweise Hall-Sensoren. Für den Fachmann ist allerdings ersichtlich, dass der Hall-Sensor nur ein ausgewähltes Beispiel eines Sensors ist, der Drehzahlen von beispielsweise rotierenden Strukturen erfassen kann. Andere Arten von dazu geeigneten Sensoren sind z.B. optische Sensoren, HF Sensoren, elektromagnetische Feldplatten oder kapazitive Sensoren. Demnach ist die vorliegende Beschreibung der Erfindung nicht auf Hall-Sensoren beschränkt, sondern ist auch für andere Arten von Sensoren gültig, die die Drehzahlen von rotierenden Strukturen erfassen.

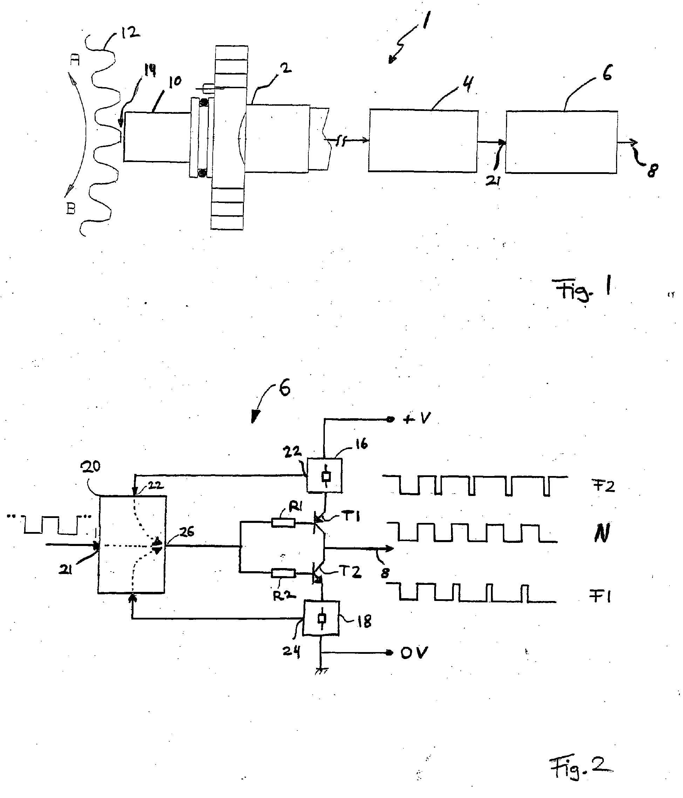

Figur 1 zeigt eine schematische Darstellung eines Ausführungsbeispiels einer Vorrichtung 1 zur Messung von Drehzahlen mit einer Sensoreinrichtung. Die Vorrichtung 1 hat in einem Ausführungsbeispiel ein Gehäuse 2, z. B. aus Metall, in dem die Sensoreinrichtung und eine Auswerteelektronik, die z. B. verschiedene Einrichtungen 4, 6 enthält, angeordnet sind. Die Sensoreinrichtung hat eine Anordnung von einem oder mehreren Hall-Sensoren. Die Sensoreinrichtung und die Auswerteelektronik können dabei beispielsweise in einem anwendungsspezifischen integrierten Schaltkreis (ASIC) angeordnet sein. Die Vorrichtung 1 hat einen Ausgang 8 für ein Sensorsignal und zwei Anschlüsse (+V, 0V) zum Anschluss an eine Spannungsquelle. In einem Ausführungsbeispiel liefert die Spannungsquelle eine Spannung von ca. +5V. Je nach Anwendung und verwendeten elektronischen Komponenten können auch höhere oder niedrigere Spannungen gewählt werden.

Wie in Figur 1 gezeigt, hat die Vorrichtung 1 ausserdem einen Permanentmagneten 10, der nahe dem ASIC und damit nahe dem oder der Hall-Sensoren angeordnet ist. Für ein besseres Verständnis ist die Vorrichtung 1 in Figur 1 nahe einer rotierenden ferromagnetischen Struktur 12 angeordnet, und zwar so, dass der Permanentmagnet 10 durch einen Spalt 14 von der Struktur 12 getrennt ist. Die ferromagnetische Struktur 12 ist in einem Ausführungsbeispiel ein Zahnrad, das sich in Figur 1 mit (Richtung B) oder entgegen (Richtung A) dem Uhrzeigersinn, oder abwechselnd in eine der beiden Richtungen A, B drehen kann.

Dreht sich das Zahnrad, vergrössert und verkleinert sich der Spalt 14 mit der Periodizität der Zähne. Die periodische Änderung des Spaltes 14 verursacht eine periodische Magnetfeldänderung, die ein Hall-Sensor in ein elektrisches Sensorsignal wandelt, das an die mit dem Hall-Sensor direkt oder indirekt verbundenen Einrichtungen 4, 6 weitergeleitet wird.

Figur 2 zeigt eine schematische Darstellung eines Ausführungsbeispiels der Einrichtung 6, die eine Push-Pull Schaltung als Ausgangsstufe hat. Die gezeigte Push-Pull Schaltung enthält zwischen den +V und 0V Spannungsanschlüssen eine Serienschaltung eines pnp Bipolartransistors T1 und eines npn Bipolartransistors T2, wobei die Kollektoren der beiden Transistoren T1, T2 miteinander verbunden sind. Der Ausgang 8 liegt an der Verbindung der beiden Kollektoren. Die Basisanschlüsse der Transistoren T1, T2 sind über Widerstände R1, R2 mit einer Einrichtung 20 verbunden.

Zusätzlich zeigt Figur 2 dem Ausgang 8 zugeordnete schematische Zeitdiagramme für verschiedene Betriebszustände, nämlich einen Normalbetrieb N und zwei mögliche Störfälle F1, F2. Im Störfall F1 kommt es zu einem Kurzschluss zwischen dem Ausgang 8 und dem 0V Spannungsanschluss, und im Störfall F2 kommt es zu einem Kurzschluss zwischen dem Ausgang 8 und dem +V Spannungsanschluss.

Im Normalbetrieb N liegt das Sensorsignal, d.h. die Rechteckspannung, an den Basisanschlüssen an. Hat das Sensorsignal einen hohen Pegel leitet der Transistor T2 und die Spannung am Ausgang 8 ist etwa null. Hat das Sensorsignal einen tiefen Pegel sperrt der Transistor T2, der Transistor T1 leitet und die Spannung am Ausgang 8 ist etwa +V. Im folgenden ist ein hoher Pegel als "High" bezeichnet und ein niedriger Pegel als "Low". Ist im Störungsfall F2 beispielsweise der Ausgang 8 mit dem +V Spannungsanschluss verbunden, fliesst ein hoher Kurzschlussstrom durch den Transistor T2, wenn das Sensorsignal "High" ist. Im anderen Kurzschlussfall fliesst ein hoher Kurzschlussstrom durch den Transistor T1, wenn das Sensorsignal "Low" ist.

Um im Störungsfall Kurzschlussströme zu vermeiden, ist die Einrichtung 6 mit der Schaltung 20 ausgestattet, die die Ströme durch die Emitter der beiden Transistoren T1, T2 auswertet. Dazu ist ein Zweipol 16 zwischen dem Emitter des Transistors T1 und dem +V Spannungsanschluss geschaltet, und ein Zweipol 18 ist zwischen dem Emitter des Transistors T2 und dem 0V Spannungsanschluss geschaltet. Die Zweipole 16, 18 sind in einem Ausführungsbeispiel jeweils Widerstände, die Werte von einigen zehn Ohm, beispielsweise Werte zwischen etwa 5 und etwa 10 Ohm haben. Fliesst ein Strom durch einen dieser Zweipole 16, 18, fällt daran eine Spannung ab, die proportional zum Strom und an einem Anschluss 22, 24 abgreifbar ist. Die Schaltung 20 ist mit den Zweipolen 16, 18 durch die jeweiligen Anschlüssen 22, 24 verbunden. Zusätzlich hat die Schaltung 20 einen Eingang 21 für das Rechtecksignal, und einen Ausgang 26, der mit den Widerständen R1, R2 verbunden ist.

Die Einrichtung 6 ist so ausgestaltet, dass sie erkennen kann, ob der Ausgang 8 falsch angeschlossen ist. Sie erkennt beispielsweise, ob es einen Kurzschluss zwischen dem Ausgang 8 und dem +V Spannungsanschluss gibt, oder einen Kurzschluss zwischen dem Ausgang 8 und dem 0V Spannungsanschluss gibt. Erkennt die Einrichtung 6, dass einer dieser möglichen Kurzschlüsse besteht, kann sie den Ausgang 8 kontrolliert auf "High" oder "Low" setzen, je nachdem ob ein Kurschluss zum +V oder 0V Spannungsanschluss besteht. Dadurch wird die Ausgangsstufe der Einrichtung 6 vor einer Beschädigung durch hohe Kurzschlussströme geschützt.

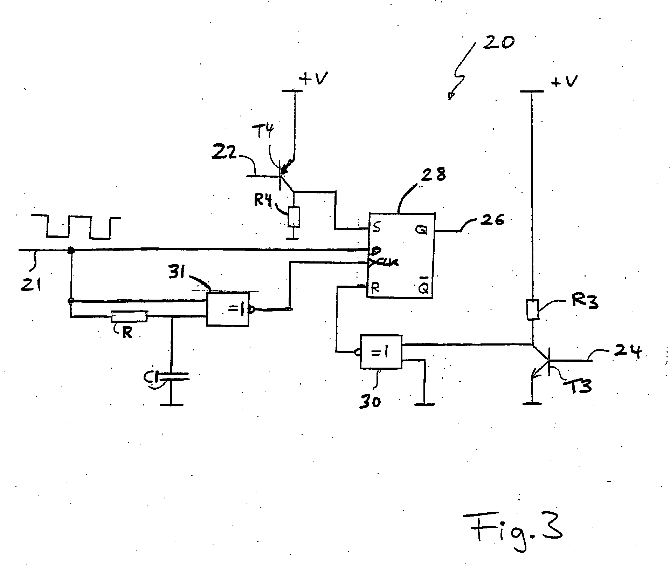

Figur 3 zeigt eine schematische Darstellung eines Ausführungsbeispiels der Schaltung 20. Die Schaltung 20 hat ein Flipflop 28, z.B. ein D-Flipflop, mit einem S-Eingang, einem R-Eingang, einem D-Eingang, der mit dem Eingang 21 der Schaltung 20 verbunden ist, einem Takteingang (CLK), und einem Q-Ausgang, der mit dem Ausgang 26 der Schaltung 20 verbunden ist. Der S-Eingang ist mit einem ersten Netwerk verbunden, das an den Anschluss 22 gekoppelt ist. Der R-Eingang ist mit einem zweiten Netwerk verbunden, das an den Anschluss 24 gekoppelt ist. Die Funktionsweise von Flipflops ist dem Fachmann allgemein bekannt, so dass hier nicht näher darauf eingegangen wird.

Ein weiteres Netzwerk ist zwischen dem Takteingang (CLK) und dem Eingang 21 der Schaltung 20 angeordnet. Dieses Netzwerk hat ein XNOR (exclusive NOR)Gatter 31, dessen Ausgang mit dem Takteingang des Flipflops 28 verbunden ist und nur dann "1" ist, wenn beide Eingangssignale gleich sind. Ein erster Eingang des XNOR Gatters 31 ist mit dem Eingang 21 der Schaltung 20 verbunden, und ein zweiter Eingang ist mit einem RC Glied verbunden. Der Kondensator C1 ist mit dem 0V Spannungsanschluss verbunden und der Widerstand R mit dem Eingang 21. Wegen dem RC Glied liegt bei einer ansteigenden Flanke des Rechtecksignals eine "1" erst verzögert am Eingang des XNOR Gatters 31 an. Dadurch wird auch der Ausgang des XNOR Gatters 31 verzögert auf "1" gesetzt.

Das erste Netzwerk hat einen pnp Transistor T4 und einen Kollektorwiderstand R4. Der Emitter ist mit dem +V Spannungsanschluss verbunden, und der Kollektor ist mit dem S-Eingang und über den Widerstand R4 mit dem 0V Spannungsanschluss verbunden. Die Basis des Transistors T4 ist mit dem Anschluss 22 verbunden.

Das zweite Netzwerk hat einen npn Transistor T3 und einen Kollektorwiderstand R3. Der Kollektor ist mit einem Eingang eines Logikgatters 30 und über den Widerstand R3 mit dem +V Spannungsanschluss verbunden, und der Emitter ist mit dem 0V Spannungsanschluss verbunden. Die Basis des Transistors T4 ist mit dem Anschluss 24 verbunden. Das Logikgatter 30 ist in einem Ausführungsbeispiel ein XNOR Gatter, dessen zweiter Eingang mit dem 0V Spannungsanschluss verbunden ist. Ein Ausgang des Logikgatters 30 ist mit dem R-Eingang verbunden.

Die Funktionsbeschreibung der Schaltung 20 erfolgt mit Bezug auf die Figuren 2 und 3. Im Normalbetrieb N sind die Spannungsabfälle an den Zweipolen 16, 18 zu gering, um die Transistoren T3, T4 in den leitenden Zustand zu schalten. An den Eingängen des Logikgatters 30 liegen deshalb unterschiedliche Werte an (eine "1" vom Transistor T3), so dass sein Ausgang "0" ist und der R-Eingang inaktiv ist. Da auch der Transistor T4 nicht schaltet, liegt der S-Eingang ebenfalls auf "0". Der Q-Ausgang folgt daher dem Rechtecksignal, das am D-Eingang anliegt, wenn der Takteingang CLK "1" ist.

Ist im Störungsfall F2 der Ausgang 8 mit dem +V Spannungsanschluss verbunden, fliesst ein hoher Kurzschlussstrom durch den Transistor T2, wenn das Sensorsignal "High" ist. Der zum Kurzschlussstrom proportionale Spannungsabfall am Zweipol 18 schaltet den Transistor T3 in den leitenden Zustand, so dass an den Eingängen des Logikgatters 30 gleiche Werte anliegen (eine "0" vom Transistor T3). Der Gatterausgang ist "1" und damit ist der R-Eingang aktiv. Der aktive R-Eingang schaltet den Q-Ausgang von "1" auf "0". Dadurch wird der Transistor T2 in den sperrenden Zustand versetzt und der Kurzschlussstrom sehr schnell unterbrochen, beispielsweise im µs-Bereich (z.B. innerhalb 2-3 µs), bevor Schäden entstehen. Damit wird der Ausgang 8 auf "High" forciert. Dieser Vorgang wird bei jeder Umschaltung des Ausganges 8 nach "Low" wiederholt.

Ist dagegen im Störungsfall F1 der Ausgang 8 mit dem 0V Spannungsanschluss verbunden, fliesst ein hoher Kurzschlussstrom durch den Transistor T1 zum 0V Spannungsanschluss, wenn das Sensorsignal "Low" ist. Der mit dem 0V Spannungsanschluss verbundene Ausgang 8 "zieht" den Anschluss 22 gegen null Volt und schaltet somit den Transistor T4 in den leitenden Zustand. Am Widerstand R4 und am S-Eingang liegt damit eine "1". Der nun aktive S-Eingang schaltet den Q-Ausgang von "0" auf "1". Dadurch wird der Transistor T1 in den sperrenden Zustand versetzt, wodurch der Ausgang 8 auf "Low" forciert wird. Die Unterbrechung des Kurzschlussstromes erfolgt in einem Ausführungsbeispiel ebenfalls im µs-Bereich (z.B. innerhalb 2-3 µs).

Die Einrichtung 6 erzeugt wenig Verlustleistung. Dies ist vor allem bei integrierten Hall-Sensoren von Vorteil, da in einem Halbleiter-Chip die Eigenerwärmung gering gehalten werden soll. Eine geringe Eigenerwärmung wirkt sich positiv auf den Temperatureinsatzbereich und auf die Lebensdauer aus.

Figur 4 zeigt eine schematische Darstellung eines Ausführungsbeispiels eines Teils der Einrichtung 4. Der gezeigte Teil der Einrichtung 4 hat ein Flipflop 32, z.B. ein RS-Flipflop, zwei Zähler 34, 36, z.B. jeweils ein Monoflop, zwei UND Gatter 38, 40, einen Inverter 42, ein Laufzeitglied 44, und einen Verstärker 46. Der Verstärker 46 verstärkt ein Sensorsignal und führt es dem Inverter 42 und dem Laufzeitglied 44 zu. Das Laufzeitglied 44 verzögert das Sensorsignal um einen Betrag, der der Laufzeit des Sensorsignals durch den Inverter 42 entspricht.

Ein Eingang des UND Gatters 38 ist mit einem Ausgang des Inverters 42 und ein Eingang ist mit einem Ausgang des Zählers 36 verbunden. Ein Ausgang des UND Gatters 38 ist mit dem R-Eingang des Flipflops 32 verbunden. Ein Eingang des UND Gatters 40 ist mit einem Ausgang des Laufzeitgliedes 44 und ein Eingang ist mit einem Ausgang des Zählers 34 verbunden. Ein Ausgang des UND Gatters 40 ist mit dem S-Eingang des Flipflops 32 verbunden. Dessen Q-Ausgang ist mit dem Anschluss 21 und einem Eingang des Zählers 34 verbunden. Der invertierende Q-Ausgang ist mit einem Eingang des Zählers 36 verbunden.

Dieser Teil der Einrichtung 4 stabilisiert das Rechtecksignal für eine vorbestimmte Zeit, bevor es der Einrichtung 6 zugeführt wird. Die Einrichtung 4 verhindert insbesondere, dass gleich nach einer Umschaltung von einem Pegel des Rechtecksignals auf den anderen Pegel, sich der Pegel erneut ändern kann. In einem Ausführungsbeispiel "blockiert" die Einrichtung 4 ein unerwünschtes Umschalten, d.h. eine Pegeländerung, für eine vorbestimmte Zeit von etwa 15 µs nach einer Umschaltung. Dies erlaubt, die Hysterese (Analog-Hysterese) zu reduzieren. Eine reduzierte Hysterese erhöht die Empfindlichkeit der Vorrichtung, was einen höheren Sensor-Polrad Abstand zulässt.

Im gezeigten Ausführungsbeispiel ist die vorbestimmte Zeit durch die Monoflops (34, 36) einstellbar. Ein Monoflop wird durch die steigende oder fallende Flanke eines Eingangsimpulses getriggert. Damit wird am Ausgang des Monoflop ein Impuls mit einer bestimmten Dauer erzeugt. Diese Impulsdauer ist durch eine RC-Zeitkonstante definiert und ist beispielsweise etwa 15 µs.

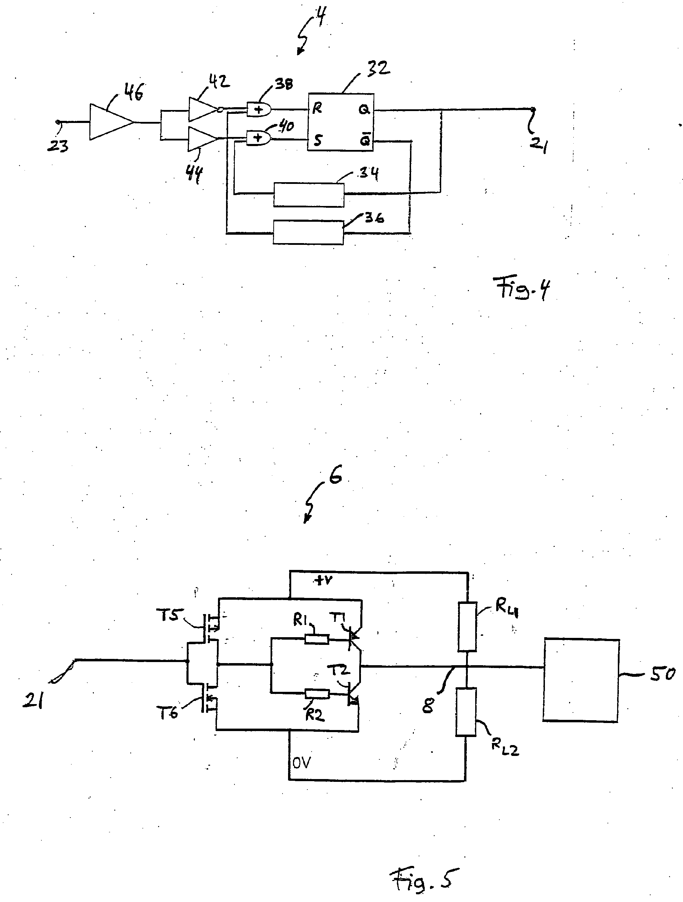

Figur 5 zeigt ein Ausführungsbeispiel einer Modifikation der Einrichtung 6. Die Modifikation ist so ausgelegt, dass sie erkennt, ob und welche Art von Leitungsunterbruch besteht. Um diese Funktionalität zu ermöglichen, besteht die Modifikation darin, zusätzlich zu den in Figur 2 gezeigten Widerständen R1, R2 und Transistoren T1, T2, eine Serienschaltung von Transistoren T5, T6 und eine Messeinheit 50 vorzusehen. In einem Ausführungsbeispiel ist der Transistor T5 ein p-Kanal MOSFET, und der Transistor T6 ein n-Kanal MOSFET. In einem anderen Ausführungsbeispiel können die Transistoren T5, T6 bipolare Transistoren sein.

Die Serienschaltung der Transistoren T5, T6 ist parallel zur Serienschaltung der Transistoren T1, T2, wobei der Source-Anschluss des Transistors 5 mit dem Drain-Anschluss des Transistors T6 miteinander verbunden und über die Widerstände R1, R2 an die Basisanschlüsse der Transistoren T1, T2 gekoppelt sind. Die Gate-Anschlüsse der Transistoren T5, T6 sind miteinander und mit dem Eingang 21 verbunden.

Ein Lastwiderstand R_{L1} ist zwischen dem Ausgang 8 und dem +V Spannungsanschluss angeordnet, und ein Lastwiderstand R_{L2} ist zwischen dem Ausgang 8 und dem 0V Spannungsanschluss geschaltet. Die Lastwiderstände R_{L1}, R_{L2} bilden einen Spannungsteiler, an den die Messeinheit 50 gekoppelt ist.

In der in Figur 5 gezeigten Modifikation der Einrichtung 6 sind die in Figur 2 gezeigten Elemente zur Vermeidung von hohen Kurzschlussströmen nicht gezeigt. In einem Ausführungsbeispiel können diese Elemente jedoch vorhanden sein, um die Einrichtung wie oben beschrieben vor hohen Kurzschlussströmen zu schützen.

Figur 5 illustriert den Normalbetrieb der Einrichtung 6. Das am Eingang 21 anliegende Rechtecksignal schaltet die Transistoren T5, T6 abwechselnd in die leitenden und sperrenden Zustände, wobei der Transistor T5 bei einem "Low" Signal leitet und der Transistor T6 bei einem "High" Signal. Dem entsprechend leitet der Transistor T2 bei einem "High" Signal (T5 leitet und T6 sperrt), und der Transistor T1 bei einem "Low" Signal (T5 sperrt und T6 leitet). Im Normalbetrieb und bei einer +5V Spannungsversorgung misst die Messeinrichtung 50 eine Spannung von etwa 4,25 V bis etwa 4,85 V für ein "High" Signal, und eine Spannung von etwa 0,15 V bis etwa 0,75 V für ein "Low" Signal.

Die von der Messeinrichtung 50 gemessene Spannung ist ein Indikator für fehlerhafte Leitungen. Ist beispielsweise die +V Spannungszuleitung unterbrochen, sind die Transistoren T5, T6 sehr hochohmig (inaktiv) und von den Transistoren T1, T2 entkoppelt. Der R_{L1}, R_{L2} Spannungsteiler wird jedoch weiterhin mit Spannung versorgt. Dadurch fliesst Strom über den Kollektor-Basis pn-Übergang des Transistors T1. Dieser Strom fliesst über die Widerstände R1, R2 zur Basis des Transistors T2 und schaltet diesen in den leitenden Zustand. Die Messeinrichtung 50 misst daher am Ausgang 8 eine Spannung von etwa 0,75V bis etwa 1,8V. Eine Spannung in diesem Bereich zeigt einen Unterbruch der +V Spannungsleitung an.

Ist beispielsweise die 0V Spannungszuleitung unterbrochen, sind die Transistoren T5, T6 ebenfalls sehr hochohmig und von den Transistoren T1, T2 entkoppelt. Der Emitter-Anschluss des Transistors T1 und der R_{L1}, R_{L2} Spannungsteiler werden jedoch weiterhin mit Spannung versorgt. An den Basis-Anschlüssen der Transistoren T1, T2 liegt keine Spannung an. Dadurch leitet der Transistor T1 und der Transistor T2 sperrt. Die Messeinrichtung 50 misst am Ausgang 8 eine Spannung von etwa 3V bis etwa 4V. Eine Spannung in diesem Bereich zeigt einen Unterbruch der 0V Spannungsleitung an.

Bei einem Leitungsunterbruch am Ausgang 8 hat nur der R_{L1}, R_{L2} Spannungsteiler einen Einfluss auf die von der Messeinrichtung 50 gemessene Spannung. In diesem Fall misst die Messeinrichtung 50 eine Spannung von etwa 2,5V.

## Patentansprüche

1. Vorrichtung zur Messung von Drehzahlen, mit einer Sensoreinrichtung, die ein drehzahlabhängiges Sensorsignal erzeugt, und einer Signalverarbeitungseinrichtung (4, 6), die das Sensorsignal auf einen festgelegten Pegel verstärkt und einem Ausgang (8) zuführt, wobei die Signalverarbeitungseinrichtung (4, 6) mit einer Schutzeinrichtung, ausgestattet ist, die die Vorrichtung vor thermischen Schäden schützt.

2. Vorrichtung nach Anspruch 1, bei der die Signalverarbeitungseinrichtung (4, 6)
eine Detektoreinrichtung (16, 18) hat, die ausgestaltet ist, um einen ersten Kurzschluss zwischen dem Ausgang (8) und einem ersten Spannungsanschluss (+V) festzustellen, und um einen zweiten Kurzschluss zwischen dem Ausgang (8) und einem zweiten Spannungsanschluss (0V) festzustellen, und
eine Auswerteeinrichtung (20) hat, die bei einem Auftreten des ersten Kurzschlusses den Ausgang (8) auf einen ersten Wert setzt, und bei einem Auftreten des zweiten Kurzschlusses den Ausgang (8) auf einen zweiten Wert setzt, um so die Signalverarbeitungseinrichtung (6) vor einer Beschädigung durch Kurzschlussströme zu schützen.

3. Vorrichtung nach Anspruch 2, bei der die Detektoreinrichtung (16, 18) mit einer Ausgangsstufe (T1, T2) der Signalverarbeitungseinrichtung (4, 6) gekoppelt ist, um einen durch einen Kurzschluss verursachten Strom durch mindestens einen Teil der Ausgangsstufe (T1, T2) zu erkennen.

4. Vorrichtung nach Anspruch 3, bei der die Detektoreinrichtung (16, 18) einen ersten Zweipol (16) und einen zweiten Zweipol (18) hat, an denen ein durch einen Kurzschluss verursachter Strom einen Spannungsabfall erzeugt.

5. Vorrichtung nach einem der Ansprüche 3 bis 4, bei der die Auswerteeinrichtung (20)
eine bi-stabile Schaltungsanordnung (28) hat, die einen mit der Ausgangsstufe (T1, T2) verbundenen Ausgang (26), um bei einem Kurzschluss das Setzen des ersten oder zweiten Wertes zu verursachen,
einen ersten Schaltungsteil (T4, R4) hat, der beim zweiten Kurzschluss einen ersten Eingang (S) der bi-stabilen Schaltungsanordnung (28) aktiviert, und
einen zweiten Schaltungsteil (T3, R3, 30) hat, der beim ersten Kurzschluss einen zweiten Eingang (R) der bi-stabilen Schaltung (28) aktiviert.

6. Vorrichtung nach einem der vorhergehenden Ansprüche, bei der die Signalverarbeitungseinrichtung (4, 6) eine Stabilisierungseinrichtung (4) hat, die das Sensorsignal nach einer Umschaltung von einem hohen auf einen niedrigen Pegel und nach einer Umschaltung von einem niedrigen Pegel auf einen hohen Pegel für eine festgelegte Zeitdauer stabilisiert und so verhindert, dass das Sensorsignal unkontrolliert umschaltet.

7. Vorrichtung nach Anspruch 6, bei der die Stabilisierungseinrichtung (4) eine bi-stabile Einrichtung (32), die zwischen einem Eingang (23) und einem Ausgang (21) der Stabilisierungseinrichtung (4) gekoppelt ist, und ein Schaltstufe (34, 36) hat, die Ausgangssignale der bi-stabilen Einrichtung (32) zu Eingängen der bi-stabilen Einrichtung (32) rückkoppelt.

8. Vorrichtung nach Anspruch 1, bei der eine Messeinheit (50) an den Ausgang (8) der Vorrichtung gekoppelt ist, wobei die Messeinheit (50)
im Normalbetrieb für ein "High" Signal eine Spannung in einem ersten Bereich misst, und für ein "Low" Signal eine Spannung in einem zweiten Bereich,
im Fall einer Unterbrechung der +V Spannungszuleitung, für ein "High" Signal eine Spannung in einem dritten Bereich misst, und für ein "Low" Signal eine Spannung in einem vierten Bereich,
im Fall einer Unterbrechung der 0V Spannungszuleitung, für ein "High" Signal eine Spannung in einem fünften Bereich misst, und für ein "Low" Signal eine Spannung in einem sechsten Bereich, und
im Fall einer Unterbrechung zum Ausgang (8) eine vorbestimmte Spannung misst.

9. Vorrichtung nach Anspruch 8, bei der die Messeinheit (50) an eine Ausgangsstufe der Signalverarbeitungseinrichtung (6) gekoppelt ist, wobei die Ausgangsstufe eine erste aus einer Serienschaltung von Transistoren (T1, T2) bestehende Stufe und eine zweite aus einer Serienschaltung von Transistoren (T5, T6) bestehende Stufe hat, wobei die erste und zweite Stufen parallel geschaltet sind.

10. Vorrichtung nach Anspruch 9, bei der die Messeinheit (50) an die erste Stufe gekoppelt ist.

11. Verfahren zum Bestimmen einer Störung in einer Vorrichtung zur Messung von Drehzahlen, die eine Sensoreinrichtung hat, die ein drehzahlabhängiges Sensorsignal erzeugt, und die eine Signalverarbeitungseinrichtung (4, 6) hat, die das Sensorsignal auf einen festgelegten Pegel verstärkt und einem Ausgang (8) zuführt,
bei dem eine Messeinheit (50) an den Ausgang (8) gekoppelt wird,
bei dem im Normalbetrieb für ein "High" Signal eine Spannung in einem ersten Bereich gemessen wird, und für ein "Low" Signal eine Spannung in einem zweiten Bereich,
bei dem im Fall einer Unterbrechung einer +V Spannungszuleitung, für ein "High" Signal eine Spannung in einem dritten Bereich gemessen wird, und für ein "Low" Signal eine Spannung in einem vierten Bereich,
bei dem im Fall einer Unterbrechung einer 0V Spannungszuleitung, für ein "High" Signal eine Spannung in einem fünften Bereich gemessen wird, und für ein "Low" Signal eine Spannung in einem sechsten Bereich, und
bei dem im Fall einer Unterbrechung zum Ausgang (8) eine vorbestimmte Spannung gemessen wird.
